# EUROPÄISCHE PATENTSCHRIFT

(11) **EP 2 640 998 B1**
(45) Veröffentlichungstag und Bekanntmachung des Hinweises auf die Patenterteilung: **05.08.2020**
(21) Anmeldenummer: 11764209.0
(22) Anmeldetag: 04.10.2011
(51) Int. Cl.: F16D 65/00, F16D 65/14

(54) **ELEKTROMECHANISCH BETÄTIGBARE FAHRZEUGBREMSE MIT VERBESSERTEM KOLBEN**
ELECTROMECHANICALLY OPERABLE VEHICLE BRAKE HAVING AN IMPROVED PISTON
FREIN DE VÉHICULE À COMMANDE ÉLECTROMÉCANIQUE, PRÉSENTANT UN PISTON PERFECTIONNÉ

(30) Priorität: 17.11.2010 DE 102010044029; 09.12.2010 DE 102010062765; 15.08.2011 DE 102011080940
(43) Veröffentlichungstag der Anmeldung: 25.09.2013
(73) Patentinhaber: Continental Teves AG & Co. OHG, 60488 Frankfurt am Main (DE)
(72) Erfinder: PLATZER, Rudolf, 60528 Frankfurt (DE); SEMSCH, Martin, 35510 Maibach-Butzbach (DE); TEITGE, Hilmar, 60325 Frankfurt (DE); REICH, Achim, 65719 Hofheim (DE); WINKLER, Thomas, 55122 Mainz (DE); WÜRZ, Matthies, 61440 Oberursel (DE); STOLTZE, Michael, 63512 Hainburg (DE)
(86) Internationale Anmeldenummer: PCT/EP2011/067336
(87) Internationale Veröffentlichungsnummer: WO 2012/065784

(56) Entgegenhaltungen:
- WO-A1-97/30294
- DE-A1- 10 218 112
- DE-A1-102009 012 016

## Beschreibung

Die Erfindung betrifft eine elektromechanisch betätigbare Fahrzeugbremse.

Die WO 97/30294 A1 betrifft eine gattungsgemäße Fahrzeugbremse einschließlich Ausgleichselement zur verbesserten Kolbenkupplung nach den Merkmalen des Oberbegriffs des Anspruchs 1. Dabei ist das Arrangement so ausgeführt, dass der Bremskolben über das Ausgleichselement nachgiebig an der Spindelbaueinheit zentriert ist.

Die DE 10 2009 012 016 A1 betrifft eine Kraftübertragungsvorrichtung die gesondert ein elastisch eingespanntes Axialfederelement integriert, um eine mechanische Anschlagdämpfung zwischen Gewindemutter und einem Kolbenboden zu ermöglichen.

In dem Bestreben, eine leistungsfähige sowie klein und leicht bauende Radbremse bereitzustellen, umfasst ein elektromechanischer Aktuator einen Elektromotor und ein mehrstufiges Getriebe, das dazu dient, eine elektromotorische Antriebsdrehbewegung eines vergleichsweise leicht und klein dimensionierten Elektromotors zu untersetzen, und diese untersetzte Antriebsdrehbewegung in die geforderte Translationsbewegung umzuwandeln, um Bremskräfte zu erzeugen. Zu diesem Zweck umfasst das Getriebe eine Spindel-Mutter-Anordnung, welche die Rotationsbewegung in eine Translationsbewegung wandelt. Der elektromechanische Aktuator ist dazu auf einer einzigen Seite an einem faustförmigen Bremsgehäuse befestigt, welches einen oder mehrere translatorisch verschiebbare Kolben auf der Aktuatorseite aufnimmt. Das Bremsgehäuse ist in Relation zu einem fahrzeugfesten Halter verschiebbar angeordnet. Durch Ausnutzung von Reaktionskräften, unter Ausführung einer Relativverschiebung vom Bremsgehäuse, wird es dadurch ermöglicht, dass ein einziger elektromechanischer Aktuator mit geringem Gewicht prinzipiell ausreicht, um beidseits einer Bremsscheibe angeordnete Bremsbeläge mit Hilfe von gegenläufigen Translationsbewegungen, sowie mit der geforderten Zuspannkraft in Höhe von etwa 1800 Newton, an Reibflächen der Bremsscheibe anzulegen.

Bei den sogenannten kombiniert hydraulisch und elektromechanisch betätigbaren Fahrzeugbremsen mit einer elektromechanisch ausführbaren Feststellbremsfunktion besteht weiterhin die Besonderheit, dass die Energieerzeugung für die Bremsbetätigung sowohl elektromechanisch, hydraulisch oder kombiniert ausgeführt werden kann. Aus diesem Grund ist in einem Kraftfluss zwischen der Spindel-Mutter-Anordnung und dem Kolben eine lösbare Kupplung vorgesehen, welche eine rein hydraulische Betätigung ohne Beschädigung oder negative Rückwirkung auf die Spindel-Mutter-Anordnung ermöglicht.

Es ist eine Aufgabe der vorliegenden Erfindung, eine verbesserte Lösung zur Bereitstellung einer besonders geräuscharm, elektromechanisch betätigbaren Fahrzeugbremse bereitzustellen.

Zur Lösung des Problems wird mithin eine elektromechanisch betätigbare Fahrzeugbremse mit den Merkmalen des Patentanspruchs 1 vorgeschlagen, wobei das Ausgleichselement als Einsatz für den Kolben ausgebildet ist, dass eine Wandung des Kolbens eine Aufnahme für das Ausgleichselement aufweist, und dass das Ausgleichselement zur Bildung einer vormontierten Kolbenbaueinheit an dem Kolben befestigt angeordnet ist.

Weitere Einzelheiten der Erfindung gehen aus Unteransprüchen zusammen mit der Beschreibung anhand der Zeichnung hervor. In der Zeichnung zeigt:
- Fig. 1: eine elektromechanisch betätigbare Fahrzeugbremse in Ausführungsform einer kombinierten Fahrzeugbremse, und
- Fig. 2-9: Kolbenbaueinheit mit Ausgleichselement als Dämpfungsmittel

in unterschiedlichen Ausführungsbeispielen.

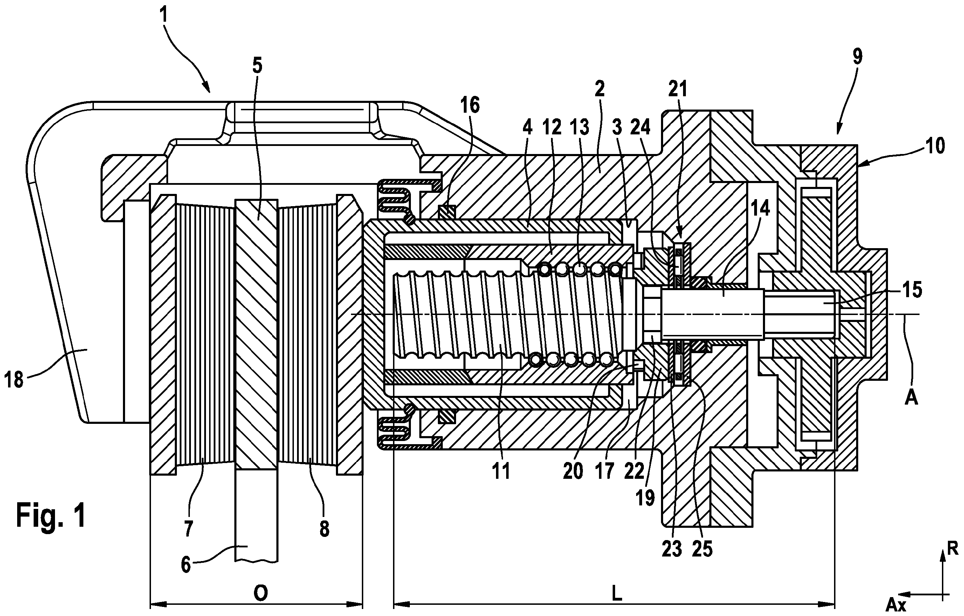

In der Fig. 1 ist eine hydraulisch und elektromechanisch betätigbare Fahrzeugbremse 1 mit wesentlichen Bauteilen dargestellt. Diese umfasst eine hydraulisch betätigbare Betriebsbremsfunktion und eine elektromechanisch betätigbare, stromlos hemmende Feststellbremsfunktion. Die Fahrzeugbremse 1 ist in dem bevorzugten Beispiel als Schwimmsattel-Scheibenbremse mit einem längs einer Achse A innerhalb einer zylinderförmigen ggf. abgestuft ausgeführten Kolbenbohrung 3 mit einem verschiebbar aufgenommenen Kolben 4 ausgeführt, wobei Einzelheiten eines fahrzeugfesten Halters hier nicht gezeigt sind. Das Gehäuse 2 (Bremssattel) ist weitestgehend C- oder U-förmig gestaltet, um einen Reibring 5 einer Bremsscheibe 6, sowie zugeordnete Reibflächen und Bremsbeläge 7,8, zu umgreifen.

Weil die hydraulische Betätigungsart auf Grundlage des hydraulischen Kolbens 4 einem Bremsenfachmann ausreichend bekannt ist, wird auf eine nähere Erläuterung verzichtet.

Für eine elektromechanisch ausgeführte Feststellbremsfunktion - oder bei den vollständig elektromechanisch betätigbaren Fahrzeugbremsen zur Ausführung sämtlicher Bremsfunktionen - dient ein elektromechanischer Aktuator 9 umfassend wenigstens einen nicht gezeigten Elektromotor und ein Getriebemodul 10, wobei Teile vom Getriebe im Gehäuse 2 angeordnet sind, und dazu dienen eine rotatorische Antriebsdrehbewegung des Elektromotors in eine translatorische Verschiebungsbewegung des Kolbens 4 entlang dessen Achse A, sowie eine stromlose Feststellbremswirkung zu ermöglichen.

In diesem Zusammenhang bietet es sich auch an, dass ein vorzugsweise zweistufiges, rein rotatorisch aktuiertes Getriebe, Sensorik sowie ggf. eine elektronische Steuereinheit in einem gebündelt vormontierten Antriebsmodul integriert vorgesehen ist, das gebündelt am Gehäuse 2 montierbar ist.

Ein Bewegungswandler (rotatorische Antriebsdrehbewegung/translatorische Kolbenbewegung) vom Getriebe befindet sich weitestgehend im Gehäuse 2 und ist im Wesentlichen durch eine rotatorisch angetriebene Gewindespindel 11 und durch eine weitgehend drehfest im Gehäuse 2 angeordnete Gewindemutter 12 gebildet, welche den Kolben 4 beaufschlagt. In bevorzugter Ausführungsform ist die Gewindemutter 12 derart mit dem Kolben 4 gekoppelt, so dass sowohl eine Vorschub- als auch eine Rückzugsbewegung auf den Kolben 4 übertragbar sind. Mit anderen Worten kann es vorgesehen sein, dass nach einer Bremsbetätigung ein Lüftspiel gezielt elektromechanisch eingestellt wird. Zwischen Gewindespindel 11 und Gewindemutter 12 befinden sich zwecks Reibungsminderung Wälzkörper 13, die vorzugsweise kugelförmig ausgebildet sind, wobei ein Kugelumlauf durch Federmittel substituiert sein kann. Die Gewindespindel 11 umfasst einen drehfesten Schaft 14, der mit einem Mitnehmerabschnitt 15 aus dem Gehäuse 2 herausragt, und unter Zwischenschaltung eines, bevorzugt zweistufigen, Untersetzungsgetriebes von dem Elektromotor angetrieben wird. Bei den hydraulisch kombinierten Bremsen sind weiterhin Mittel zum Abdichten 16 einer Druckkammer 17 vorgesehen.

Die Gewindespindel 11 ist zusammen mit dem Kolben 4 in der Kolbenbohrung 3 vom Gehäuse 2 aufgenommen. Dies erfordert einen präzisen Einführ- und Einschub-Montagevorgang. Weil eine Länge l der Gewindespindel 11 größer als eine Öffnung o vom Gehäuse ausgebildet ist, wobei sogenannte Faustfinger 18 ein unmittelbar koaxiales Einführen vom Gewindespindelmodul verhindern, ist zur Montage eine definierte Verschwenkbewegung mit einer vorgegebenen Kinematik erforderlich. Nach Montage im Gehäuse 2 ist das Gewindespindelmodul in Achsrichtung A durch eine, auf der Gewindespindel 11 aufliegende Anschlagscheibe 19, sowie durch ein mehrteiliges Axiallager 21, am Gehäuse 2 abgestützt.

Beim reversierten Drehantreiben der Gewindespindel 11 in die Löserichtung könnte es durch einen ruckartigen Aufprall zwischen einer Aufstandsfläche der Gewindemutter 12 und einem flach ausgebildeten Radialanschlag der Gewindespindel 11 zu Selbsthemmung zwischen Gewindespindel 11 und Gewindemutter 12 kommen, wobei ein elektromotorisch unlösbar großes Reibmoment zwischen den beteiligten Bauteilen entstehen könnte. Aus diesem Grund umfasst das vormontierte Spindelmodul mehrere Teile, nämlich eine Anschlagscheibe 19 mit einem Tangentialanschlag 20 als Anschlagmittel für eine zugeordnete, tangential platzierte, Anschlagfläche der Gewindemutter 12. Die Anschlagscheibe 19 ist zu diesem Zweck zur Justage vom rückwärtigen Anschlag in einer vorbestimmten Winkelposition, in Relation zur Gewindespindel 11 verdrehsicher sowie axial auf eine Schlüsselfläche 22, Mehrkant, Polygonprofil oder ähnliches der Gewindespindel 11 drehfest aufgeschoben. Weiterhin umfasst das Gewindespindelmodul Hauptbestandteile vom Axiallager 21, nämlich eine Axiallagerscheibe 23, Wälzkörper 24 die insbesondere in einem Ring zusammengefasst sind, oder alternativ eine Gleitlagerscheibe, und eine gehäuseseitig angeordnete Axiallagerscheibe 25. Es versteht sich, dass die genannten Bauteile genauso wie die Anschlagscheibe 19 axial auf die Gewindespindel 1 aufgefädelt sind, wobei die Bauteile vom Axiallager 21 selbstverständlich relativ zur Gewindespindel 11 frei verdrehbar sind, um der Lagerfunktion nachzukommen.

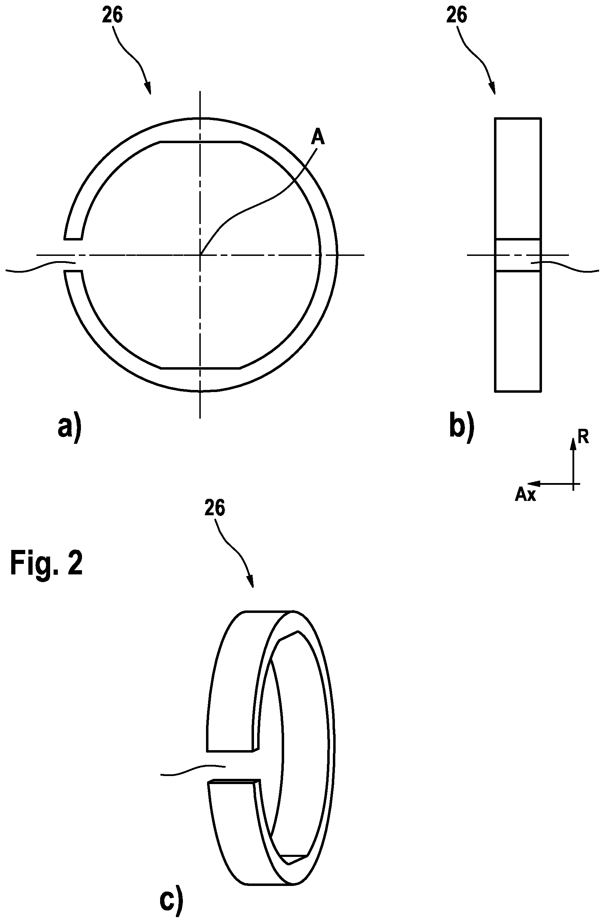

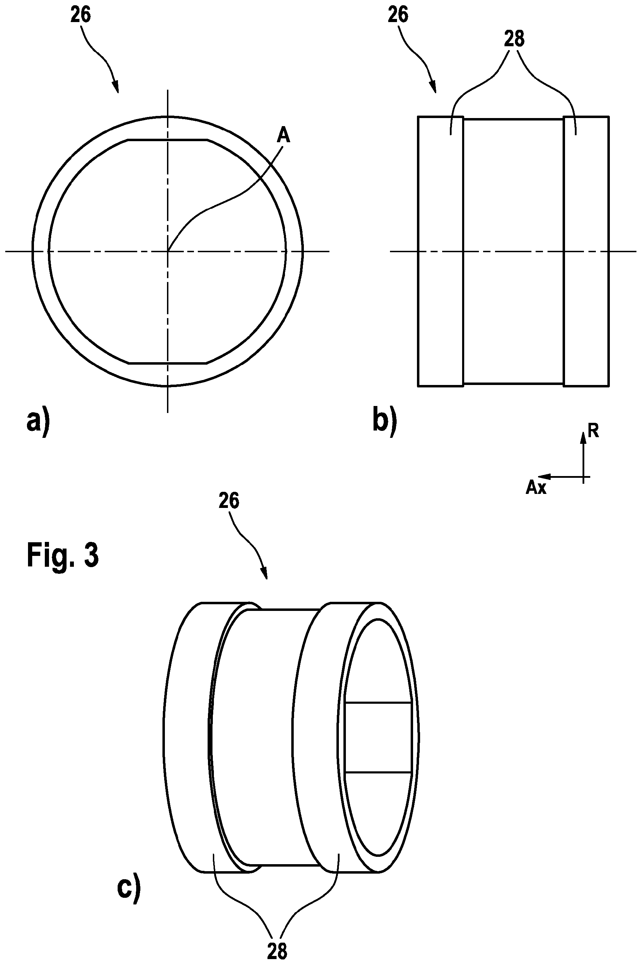

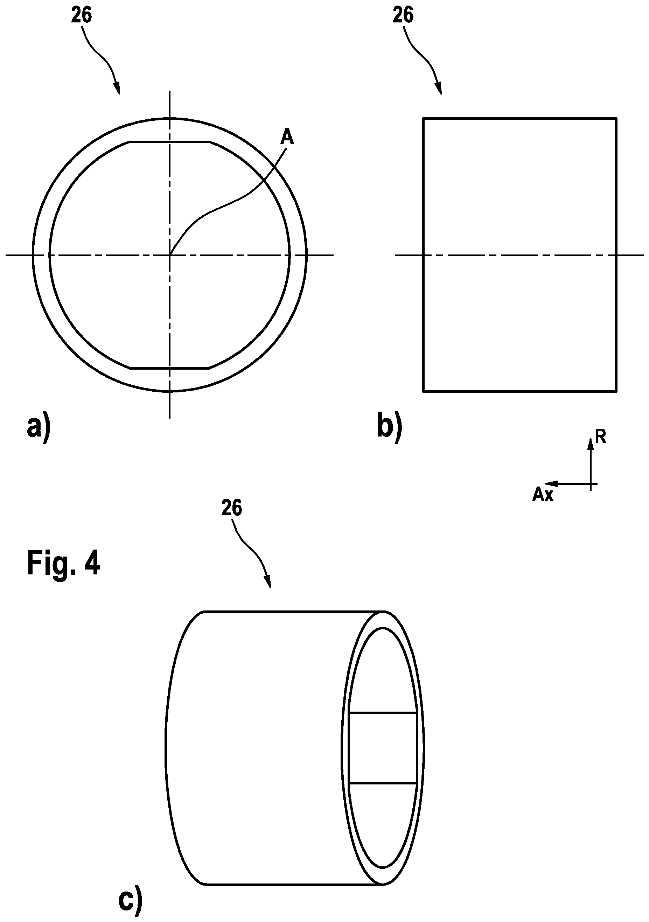

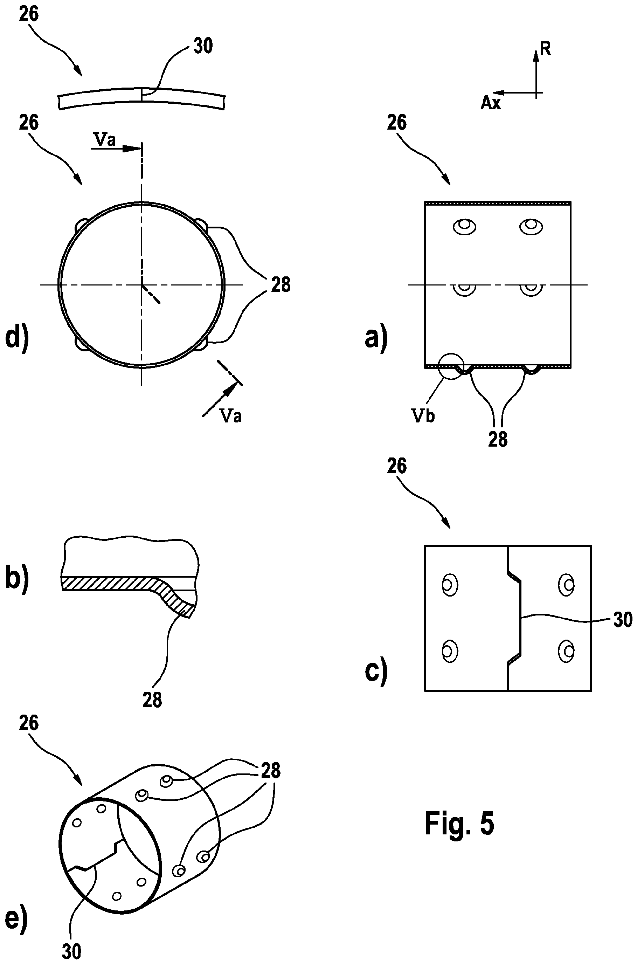

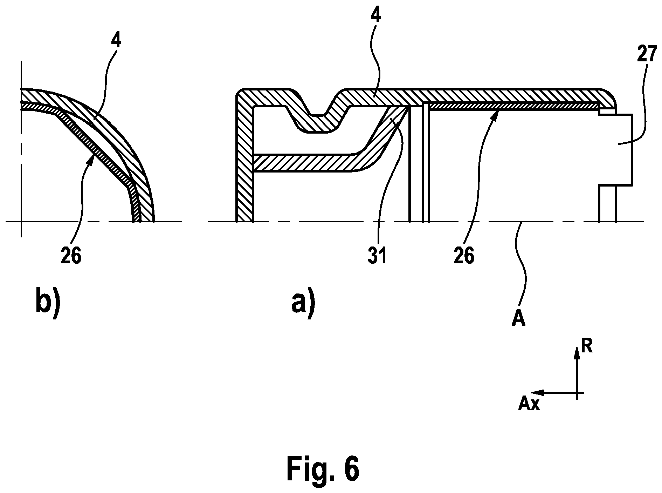

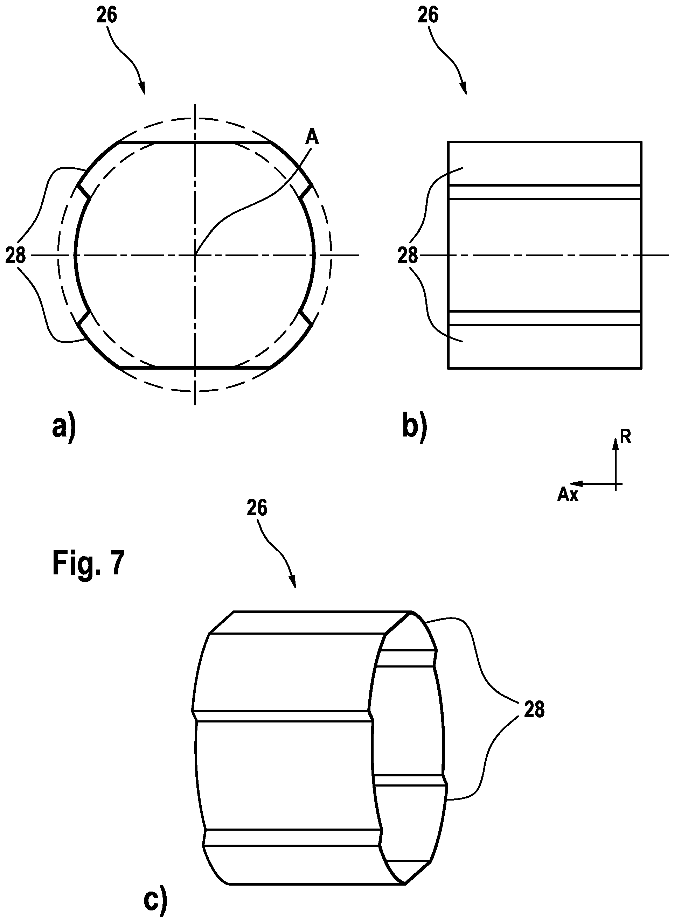

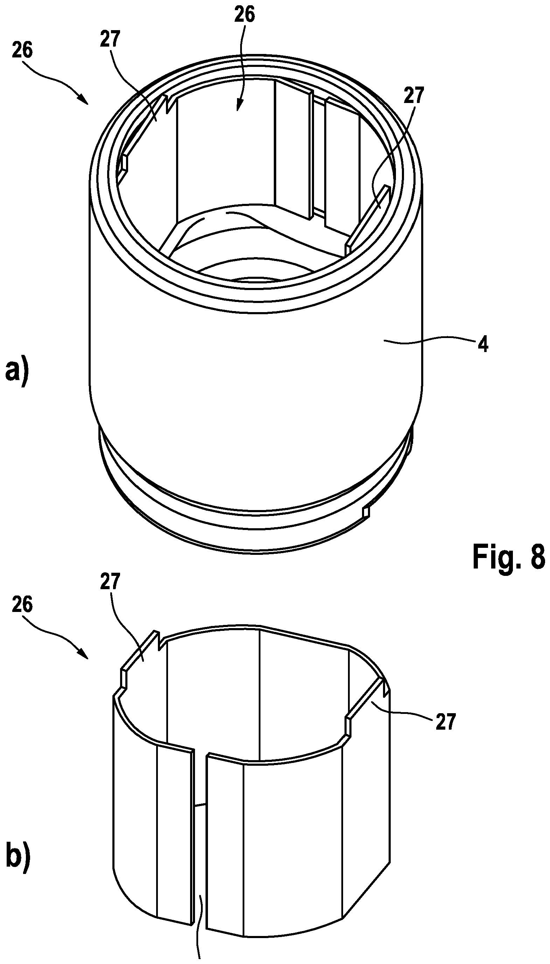

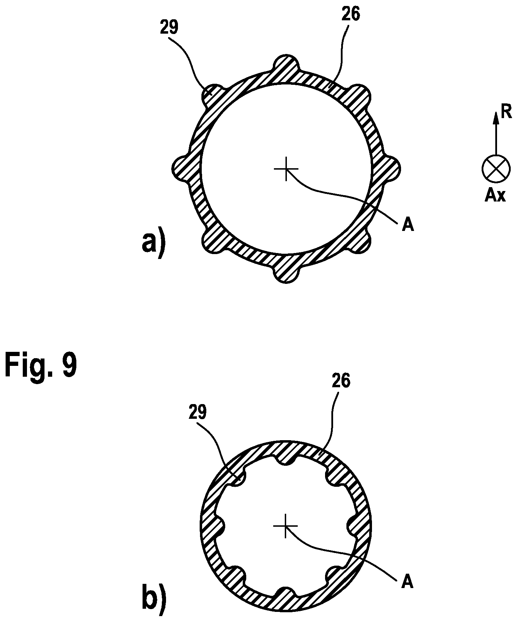

Nachstehend werden die Ausführungsformen nach den Figuren 2-9 beschrieben. Demnach betrifft die Erfindung primär einen Kolben 4 zum Einsatz bei einer Kraftfahrzeugbremse. Zur Vermeidung von übermäßigem, unerwünschtem Spiel, Vibration, Geräuschen zwischen benachbarten Bauelementen oder ähnlichem sieht die Erfindung im Kern vor, dass im Bereich einer Kupplung zwischen Spindel-Mutter-Anordnung und Kolben 4 wenigstens ein Ausgleichselement 26 vorgesehen ist, welches unerwünschte Bauteilschwingungen vermeidet oder zumindest reduziert. Das Ausgleichselement ist in Radialrichtung R Wirksam. Das Ausgleichselement 26 kann elastische Federeigenschaften aufweisen und elastisch vorgespannt ausgebildet sein, so dass Spiel gewissermaßen selbsttätig reduziert wird. Demnach ist das Ausgleichselement 26 elastisch zwischen den benachbarten Bauteilen als gesonderter Zwischenkörper angeordnet. Durch die derartige Zwischenlage wird eine unmittelbare Berührung der Bauteile vermieden. Es versteht sich, dass eine konstruktiv vorgegebene Eigenfrequenz des Ausgleichselementes 26 - auch in Hinblick auf irgendwelche Resonanzen höherer Ordnung - ausreichend Abstand von der Anregungsfrequenz aufweist. Es ist besonders von Vorteil, wenn in Hinblick auf die Abstimmung der Eigenfrequenz eine Analyse von dem montierten Gesamtsystem erfolgt, so dass das gewünschte Ergebnis erzielt wird. Diese Vorgehensweise kann sogar dazu genutzt werden, das Betriebsgeräusch von einem Aktuator nach Wunsch zu modellieren.

Wie den Figuren im Einzelnen zu entnehmen ist, ist erfindungsgemäß ein Ausführungsbeispiel eines Ausgleichselementes 26 prinzipiell als zusätzlich gesondert eingefügter Einsatz für einen Kolben 4 ausgebildet. Dadurch ist eine besonders montagefreundliche und betriebssichere Bauweise gegeben. Die Montage des Ausgleichselementes 26 in einer Aufnahme innerhalb einer radial inneren Wandung vom Kolben kann sich unmittelbar an die Herstellung vom Kolben 4 anschließen. Die Aufnahme kann eine oder mehrere nach radial innen weisenden Stufen, Hinterschneidungen oder ähnliches aufweisen, was zur formschlüssigen Lagesicherung, insbesondere in Axialrichtung, beiträgt. Dazu gehört beispielsweise auch ein Randabschnitt der ausgehend von der Wandung nach radial innen gekröpft vorgesehen ist.

Das Ausgleichselement 26 kann als Federelement mit zylinderform, ringform oder buchsenform ausgebildet sein. Bevorzugt verfügt das Ausgleichselement 26 über eine axial gerichtet angeordnete Überlappung 30, die formschlüssig sein kann, so dass dadurch eine radial gerichtete, elastische Federwirkung ermöglicht ist, um eine kraftschlüssige Fixierung vom Ausgleichselement im Inneren vom Kolben vorzusehen. Folglich ist es möglich, das Ausgleichselement 26 als elastischen, geschlitzten Ring/Buchse auszubilden, und elastisch zwecks Montage zu deformieren, und dann radial innerhalb einer Aufnahme zu platzieren, wobei die elastische Deformation nach Montage zumindest teilweise rückgängig gemacht wird. Durch die elastische Rückverformung von dem Ausgleichselement 26, und durch die bewirkte elastische Vorspannung innerhalb von der Aufnahme ist das Ausgleichselement 26 im Kolben 4 fixiert. Dadurch ist eine vormontierte Kolbenbaueinheit gegeben, welche prinzipiell auch weitere Bauteile, wie insbesondere Bauteile der Spindel-Mutter-Einheit aufweisen kann, um nachgeordnete Montageschritte an der Fahrzeugbremse/Bremssattel zu vereinfachen. Es versteht sich, dass weitere form- und/oder kraftschlüssige Befestigungsmerkmale nebeneinander vorgesehen sein können.

Das Ausgleichselement 26 kann unter Zuhilfenahme von einer einstückig angeformten oder zusätzlich vorgesehenen Verdrehsicherung drehfest in einer Aufnahme vom Kolben 4 angeordnet sein. Wenn der Kolben 4 seinerseits verdrehsicher in der Kolbenbohrung aufgenommen ist, kann dadurch gewissermaßen mittelbar eine Verdrehsicherung der Gewindemutter vorliegen. Prinzipiell ist an Stelle einer fixierten Verdrehsicherung auch eine Drehmomentbegrenzung oder -limitierung denkbar, so dass keine Verdrehsicherungsfunktion, sondern eine Rutschkupplungsfunktion integriert ist. In diesem Zusammenhang kann es gegeben sein, dass das Ausgleichselement 26 eine radial gerichtete Profilierung und/oder eine radial gerichtete Texturierung wie insbesondere mehrere Vorsprünge oder Nocken aufweist, und dass die Profilierung ausgehend von dem Ausgleichselement 26 einheitlich in Richtung auf wenigstens ein benachbartes Bauelement weist, oder dass mehrere Gruppen von Profilierungen vorgesehen sind, wobei die Vorsprünge und/oder Nocken gruppenweise gebündelt zur Anlage an einem oder an mehreren benachbarten Bauelementen vorgesehen sind.

Zur Verbesserung einer Entlüftbarkeit eines Bremssystems kann vorgesehen sein, dass zwischen Kolben 4 und Ausgleichselement 26 wenigstens ein Kanal, Öffnung oder ähnliches vorgesehen ist, und wobei dieser Kanal an einer, in endgültiger Einbauposition im Kraftfahrzeug in Vertikalrichtung besonders hoch gelegene Stelle platziert, vorgesehen ist.

Zur Herstellung von dem Ausgleichselement 26 ist es bevorzugt denkbar, dieses im Wesentlichen vergleichbar einer Gleitlagerbuchse aus einem Gleitlagerwerkstoff auszubilden. Dabei kann der Vorzug vorgesehen sein, dass sich das Ausgleichselement 26 bei dessen Montage oder im Betrieb zumindest teilweise elastisch verhalten kann. Es sind weiterhin Mehrstoff- und Mischbauformen aus Kunststoffwerkstoff wie insbesondere Teflon und/oder Metallwerkstoff und/oder Elastowerkstoff wie insbesondere EPDM denkbar. Dabei kann prinzipiell auch an elastische Hohlkörper nach Art eines zylindrischen, geschlossenen, elastischen Schlauchabschnitts gedacht werden. Der Schlauchabschnitt verfügt bevorzugt über regelmäßig an einem Innen- oder Außenumfang verteilt angeordnete Längsrippen, so dass ein einziges Ausgleichselement 26 für unterschiedlich groß ausgebildete Kolben einheitlich einsetzbar ist. Der Innendurchmesser vom Ausgleichselement 26 ist größer toleriert als ein Außendurchmesser von der Gewindemutter. In diesem Zusammenhang ist es auch denkbar, dass das Ausgleichselement 26 als schichtweise ausgebildetes Mehrstoffbauteil umfassend wenigstens einen Grundwerkstoff und wenigstens einen (elastisch-ausgleichenden) Beschichtungswerkstoff vorgesehen ist.

Gemäß einer anderen Variante ist das Ausgleichselement 26 umformtechnisch im Wesentlichen spanlos aus einem streifenförmigen, metallischen Blechwerkstoff mit regelmäßig oder unregelmäßig am Innen- und/oder am Außenumfang verteilt angeordneten, mehreren Nocken 28 als quasi-zylindrisch gerollter, am Umfang weitgehend geschlossen ausgebildeter, Einsatz für den Kolben 4 ausgebildet, und kann eine (im Querschnitt) zumindest partiell unrunde, an mehreren Seiten gewissermaßen gefaltet vorgesehene Wandung aufweisen. Durch die Nocken 28, Längsrippen 29 oder sonstige Profilierung vom Ausgleichselement 26 wird ein definierter Spalt zur Verbesserung der Entlüftbarkeit der Fahrzeugbremse vorgesehen. Im Übrigen können sämtliche Ausführungsformen eine Gestaltung aufweisen, welche eine vollständig drehfeste Platzierung im Kolben 4 ermöglicht, indem beispielweise eine Mehrkantform (bspw. Sechs- oder Achtkant) am Umfang oder Laschen 27 in Axialrichtung Ax zum An- oder Eingriff in oder an andere benachbarte Bauteile vorgesehen ist. Am Umfang vom Einsatz ist eine formschlüssig ausgebildete Überlappung 30 vorgesehen. Die Nocken 28 sind mit definierten Radien in die Wandung vom Ausgleichselement 26 eingeprägt. Es ist möglich, dass durch die Überlappung 30 eine elastische Federwirkung in Radialrichtung R erzeugt wird, so dass der Einsatz zur Fixierung, vergleichbar einem Elastoelement, in den Kolben 4 eingespannt werden kann.

### Bezugszeichenliste

- 1: Fahrzeugbremse
- 2: Gehäuse
- 3: Kolbenbohrung
- 4: Kolben
- 5: Reibring
- 6: Bremsscheibe
- 7: Bremsbelag
- 8: Bremsbelag
- 9: Aktuator
- 10: Getriebemodul
- 11: Gewindespindel
- 12: Gewindemutter
- 13: Wälzkörper
- 14: Schaft
- 15: Mitnehmerabschnitt
- 16: Mittel zur Abdichtung
- 17: Druckkammer
- 18: Faustfinger
- 19: Anschlagscheibe
- 20: Tangentialanschlag
- 21: Axiallager
- 22: Schlüsselfläche
- 23: Axiallagerscheibe
- 24: Wälzkörper
- 25: Axiallagerscheibe
- 26: Ausgleichselement
- 27: Lasche
- 28: Nocke
- 29: Längsrippe
- 30: Überlappung
- 31: Konus-Einsatz
- A: Achse
- L: Länge
- O: Öffnung
- Ax: Axialrichtung
- R: Radialrichtung

## Patentansprüche

1. Elektromechanisch betätigbare Fahrzeugbremse (1) mit verbessertem Kolben (4), wobei im Bereich einer Kupplung zwischen einer Gewindespindel-Mutter-Anordnung (11, 12) und dem Kolben (4) wenigstens ein Ausgleichselement (26) vorgesehen ist, welches unerwünschte Bauteilschwingungen in Radialrichtung R vermeidet, **dadurch gekennzeichnet, dass** das Ausgleichselement (26) als Einsatz für den Kolben (4) ausgebildet ist, dass eine Wandung des Kolbens (4) eine Aufnahme für das Ausgleichselement (26) aufweist, und dass das Ausgleichselement (26) zur Bildung einer vormontierten Kolbenbaueinheit an dem Kolben (4) befestigt angeordnet ist.

2. Elektromechanisch betätigbare Fahrzeugbremse (1) nach Anspruch 1, **dadurch gekennzeichnet, dass** das Ausgleichselement (26) form- und/oder kraftschlüssig an dem Kolben (4) befestigt angeordnet ist.

3. Elektromechanisch betätigbare Fahrzeugbremse (1) nach einem oder mehreren der vorhergehenden Ansprüche, **dadurch gekennzeichnet, dass** das Ausgleichselement (26) zwischen wenigstens zwei benachbarten Bauteilen elastisch vorgespannt vorgesehen ist.

4. Elektromechanisch betätigbare Fahrzeugbremse (1) nach einem oder mehreren der vorhergehenden Ansprüche, **dadurch gekennzeichnet, dass** das Ausgleichselement (26) als Federelement ausgebildet ist.

5. Elektromechanisch betätigbare Fahrzeugbremse (1) nach einem oder mehreren der vorhergehenden Ansprüche, **dadurch gekennzeichnet, dass** das Ausgleichselement (26) im Wesentlichen drehfest in der Aufnahme angeordnet ist, und dass zwischen Ausgleichselement (26) und Gewindemutter (12) wenigstens eine Verdrehsicherung angeordnet ist.

6. Elektromechanisch betätigbare Fahrzeugbremse (1) nach einem oder mehreren der vorhergehenden Ansprüche, **dadurch gekennzeichnet, dass** das Ausgleichselement (26) ringförmig geschlossen, oder als geschlitzter zylindrischer Ring, oder als geschlitzte Buchse ausgebildet ist.

7. Elektromechanisch betätigbare Fahrzeugbremse (1) nach einem oder mehreren der vorhergehenden Ansprüche, **dadurch gekennzeichnet, dass** das Ausgleichselement (26) eine insbesondere radial gerichtete Profilierung und/oder eine radial gerichtete Texturierung, wie mehrere Nocken (28) aufweist, und dass die Profilierung ausgehend von dem Ausgleichselement (26) einheitlich in Richtung auf wenigstens ein benachbartes Bauelement weist, und oder dass mehrere Gruppen von Profilierungen vorgesehen sind, wobei die Nocken (28) gruppenweise gebündelt zur Anlage an einem oder an mehreren benachbarten Bauelementen vorgesehen sind.

8. Elektromechanisch betätigbare Fahrzeugbremse (1) nach einem oder mehreren der vorhergehenden Ansprüche, **dadurch gekennzeichnet, dass** das Ausgleichselement (26) zumindest teilweise elastisch aus Kunststoffwerkstoff wie insbesondere aus Teflon und/oder aus Metallwerkstoff und/oder aus Elastowerkstoff ausgebildet ist.

9. Elektromechanisch betätigbare Fahrzeugbremse (1) nach Anspruch 7, **dadurch gekennzeichnet, dass** das Ausgleichselement (26) als zylindrischer Schlauchabschnitt vorgesehen ist, der mehrere, am Umfang verteilt angeordnete, Längsrippen (29) aufweist.

10. Elektromechanisch betätigbare Fahrzeugbremse (1) nach Anspruch 7, **dadurch gekennzeichnet, dass** das Ausgleichselement (26) als zylindrischer Schlauchabschnitt vorgesehen ist, der mehrere, an einem Innenumfang verteilt angeordnete Längsrippen (29) aufweist.

11. Elektromechanisch betätigbare Fahrzeugbremse (1) nach einem oder mehreren der vorhergehenden Ansprüche, **dadurch gekennzeichnet, dass** zwischen Kolben (4) und Ausgleichselement (26) wenigstens ein definierter Spalt zur Verbesserung der Entlüftbarkeit der Fahrzeugbremse (1) vorgesehen ist.

12. Elektromechanisch betätigbare Fahrzeugbremse (1) nach einem oder mehreren der vorhergehenden Ansprüche, **dadurch gekennzeichnet, dass** das Ausgleichselement (26) im Wesentlichen als Gleitlagerbuchse aus einem Gleitlagerwerkstoff ausgebildet ist.

13. Elektromechanisch betätigbare Fahrzeugbremse (1) nach einem oder mehreren der vorhergehenden Ansprüche, **dadurch gekennzeichnet, dass** das Ausgleichselement (26) als schichtweise ausgebildetes Mehrstoffbauteil umfassend wenigstens einen Grundwerkstoff und umfassend wenigstens einen elastischen Beschichtungswerkstoff vorgesehen ist.

14. Elektromechanisch betätigbare Fahrzeugbremse (1) nach einem oder mehreren der vorhergehenden Ansprüche, **dadurch gekennzeichnet, dass** ein vormontierbares Spindelmodul mehrere Teile umfasst, nämlich eine Anschlagscheibe (19) mit Tangentialanschlag (20) als Anschlagmittel für eine zugeordnete, tangential platzierte, Anschlagfläche der Gewindemutter (12).

15. Elektromechanisch betätigbare Fahrzeugbremse (1) nach einem oder mehreren der vorhergehenden Ansprüche, **dadurch gekennzeichnet, dass** ein Gehäuse (2) Mittel zum Abdichten (16) einer Druckkammer (17) aufweist.

16. Elektromechanisch betätigbare Fahrzeugbremse (1) nach einem oder mehreren der vorhergehenden Ansprüche, **dadurch gekennzeichnet, dass** die vormontierbare Kolbenbaueinheit einen Konus-Einsatz (31), der zwischen Kolben (4) und Gewindemutter (12) eingefügt ist, umfasst.

17. Elektromechanisch betätigbare Fahrzeugbremse (1) nach einem oder mehreren der vorhergehenden Ansprüche, **dadurch gekennzeichnet, dass** sich zwischen einer rotatorisch angetriebenen Gewindespindel (11) und einer drehfest in einem Gehäuse (2) angeordneten Gewindemutter (12) kugelförmige Wälzkörper (13) und Federmittel befinden.

18. Elektromechanisch betätigbare Fahrzeugbremse (1) nach einem oder mehreren der vorhergehenden Ansprüche, **dadurch gekennzeichnet, dass** das Ausgleichselement (26) zwischen den benachbarten Bauteilen Kolben (4) und Gewindemutter (12) als gesonderter Zwischenkörper angeordnet ist, wobei ein Innendurchmesser des Ausgleichselementes (26) größer toleriert ist als ein Außendurchmesser der Gewindemutter (12).

## Claims

1. Electromechanically actuatable vehicle brake (1) having an improved piston (4), wherein at least one compensating element (26), which prevents unwanted component oscillations in the radial direction R, is provided in the area of a coupling between a spindle-nut-assembly and the piston (4), **characterized in that** the compensating element (26) is embodied as an insert for the piston (4), **in that** a wall of the piston (4) comprises a receptacle for the compensating element (26), and **in that** the compensating element (26) for forming a preassembled piston functional unit is disposed so as to be fastened to the piston (4).

2. Electromechanically actuatable vehicle brake (1) according to Claim 1, **characterized in that** the compensating element (26) is disposed in a form-fitting and/or force-fitting manner on the piston (4) .

3. Electromechanically actuatable vehicle brake (1) according to one or a plurality of the preceding claims, **characterized in that** the compensating element (26) is provided so as to be elastically pretensioned between at least two adjacent components.

4. Electromechanically actuatable vehicle brake (1) according to one or a plurality of the preceding claims, **characterized in that** the compensating element (26) is embodied as a spring element.

5. Electromechanically actuatable vehicle brake (1) according to one or a plurality of the preceding claims, **characterized in that** the compensating element (26) is disposed so as to be rotationally fixed in the receptacle, and **in that** at least one anti-rotation safeguard is disposed between the compensating element (26) and the threaded nut (12).

6. Electromechanically actuatable vehicle brake (1) according to one or a plurality of the preceding claims, **characterized in that** the compensating element (26) is configured so as annularly closed, or is configured as a slotted cylindrical ring, or as a slotted bushing.

7. Electromechanically actuatable vehicle brake (1) according to one or a plurality of the preceding claims, **characterized in that** the compensating element (26) has an in particular radially oriented profiling and/or a radially oriented texturing such as a plurality of cams (28), and **in that** the profiling that emerges from the compensating element (26) points uniformly towards at least one adjacent construction element, and or **in that** a plurality of groups of profilings are provided, wherein the cams (28) are provided so as to be bundled together in groups for bearing on one or a plurality of adjacent construction elements.

8. Electromechanically actuatable vehicle brake (1) according to one or a plurality of the preceding claims, **characterized in that** the compensating element (26) is configured so as to be at least partially elastic from plastics material such as in particular from Teflon and/or from metal material and/or from elastomer material.

9. Electromechanically actuatable vehicle brake (1) according to Claim 7, **characterized in that** the compensating element (26) is provided as a cylindrical tube portion which has a plurality of longitudinal ribs (29) disposed so as to be distributed on the circumference.

10. Electromechanically actuatable vehicle brake (1) according to Claim 7, **characterized in that** the compensating element (26) is provided as a cylindrical tube portion which has a plurality of longitudinal ribs (29) disposed so as to be distributed on an internal circumference.

11. Electromechanically actuatable vehicle brake (1) according to one or a plurality of the preceding claims, **characterized in that** at least one defined gap for improving the ventilating capacity of the vehicle brake (1) is provided between the piston (4) and the compensating element (26).

12. Electromechanically actuatable vehicle brake (1) according to one or a plurality of the preceding claims, **characterized in that** the compensating element (26) is substantially configured as a friction bearing bushing composed of a friction bearing material.

13. Electromechanically actuatable vehicle brake (1) according to one or a plurality of the preceding claims, **characterized in that** the compensating element (26) is provided in the form of a layered multi-material component comprising at least one base material and comprising at least one elastic coating material.

14. Electromechanically actuatable vehicle brake (1) according to one or a plurality of the preceding claims, **characterized in that** a preassembled spindle module comprises a plurality of parts, specifically a detent disc (19) having a tangential detent (20) as a detent means for an assigned, tangentially placed, detent face of the threaded nut (12).

15. Electromechanically actuatable vehicle brake (1) according to one or a plurality of the preceding claims, **characterized in that** a housing (2) comprises means for sealing off (16) a pressure chamber (17).

16. Electromechanically actuatable vehicle brake (1) according to one or a plurality of the preceding claims, **characterized in that** the preassembled piston functional unit comprises a cone insert (31), which is installed between the piston (4) and the threaded nut (12).

17. Electromechanically actuatable vehicle brake (1) according to one or a plurality of the preceding claims, **characterized in that** spherical rolling members (13) and spring means are located between a rotatingly driven threaded spindle (11) and a threaded nut (12) which is disposed so as to be rotationally fixed in a housing (2).

18. Electromechanically actuatable vehicle brake (1) according to one or a plurality of the preceding claims, **characterized in that** the compensating element (26) as a separate intervening member is disposed between the adjacent components piston (4) and threaded nut (12), wherein an internal diameter of the compensating element (26) has larger tolerances than an external diameter of the threaded nut (12).

## Revendications

1. Frein de véhicule (1) à commande électromécanique, comprenant un piston amélioré (4), au moins un élément de compensation (26) étant disposé dans la région d'un accouplement entre un agencement de broche filetée-écrou (11, 12) et le piston (4), lequel élément de compensation empêche des oscillations indésirables de composants dans la direction radiale R, **caractérisé en ce que** l'élément de compensation (26) est réalisé sous forme d'insert pour le piston (4), **en ce qu'**une paroi du piston (4) présente un logement pour l'élément de compensation (26), et **en ce que** l'élément de compensation (26) est disposé de manière fixée sur le piston (4) pour former une unité structurelle de piston prémontée.

2. Frein de véhicule (1) à commande électromécanique selon la revendication 1, **caractérisé en ce que** l'élément de compensation (26) est disposé de manière fixée au piston (4) par engagement par correspondance de formes et/ou par force.

3. Frein de véhicule (1) à commande électromécanique selon l'une quelconque ou plusieurs des revendications précédentes, **caractérisé en ce que** l'élément de compensation (26) est prévu de manière précontrainte élastiquement entre au moins deux composants adjacents.

4. Frein de véhicule (1) à commande électromécanique selon l'une quelconque ou plusieurs des revendications précédentes, **caractérisé en ce que** l'élément de compensation (26) est réalisé sous forme d'élément de ressort.

5. Frein de véhicule (1) à commande électromécanique selon l'une quelconque ou plusieurs des revendications précédentes, **caractérisé en ce que** l'élément de compensation (26) est disposé de manière essentiellement solidaire en rotation dans le logement et **en ce qu'**entre l'élément de compensation (26) et l'écrou fileté (12) est disposée au moins une fixation antirotation.

6. Frein de véhicule (1) à commande électromécanique selon l'une quelconque ou plusieurs des revendications précédentes, **caractérisé en ce que** l'élément de compensation (26) est réalisé sous forme fermée annulaire ou est réalisé sous forme de bague cylindrique fendue ou sous forme de douille fendue.

7. Frein de véhicule (1) à commande électromécanique selon l'une quelconque ou plusieurs des revendications précédentes, **caractérisé en ce que** l'élément de compensation (26) présente un profilage orienté notamment radialement et/ou une texturation orientée radialement, comme par exemple plusieurs cames (28), et **en ce que** le profilage est orienté à partir de l'élément de compensation (26) de manière unitaire dans la direction d'au moins un élément structurel adjacent et/ou **en ce que** plusieurs groupes de profilages sont prévus, les cames (28) étant prévues de manière rassemblée en faisceau par groupes en vue de l'application contre un ou plusieurs éléments structurels adjacents.

8. Frein de véhicule (1) à commande électromécanique selon l'une quelconque ou plusieurs des revendications précédentes, **caractérisé en ce que** l'élément de compensation (26) est réalisé au moins en partie de manière élastique en matériau synthétique comme par exemple en téflon et/ou en matériau métallique et/ou en matériau élastomère.

9. Frein de véhicule (1) à commande électromécanique selon la revendication 7, **caractérisé en ce que** l'élément de compensation (26) est prévu sous forme de portion tubulaire cylindrique qui présente plusieurs nervures longitudinales (29) réparties sur la périphérie.

10. Frein de véhicule (1) à commande électromécanique selon la revendication 7, **caractérisé en ce que** l'élément de compensation (26) est prévu sous forme de portion tubulaire cylindrique qui présente plusieurs nervures longitudinales (29) réparties sur une périphérie intérieure.

11. Frein de véhicule (1) à commande électromécanique selon l'une quelconque ou plusieurs des revendications précédentes, **caractérisé en ce qu'**entre le piston (4) et l'élément de compensation (26) est prévue au moins une fente définie pour améliorer la capacité de désaérage du frein de véhicule (1).

12. Frein de véhicule (1) à commande électromécanique selon l'une quelconque ou plusieurs des revendications précédentes, **caractérisé en ce que** l'élément de compensation (26) est réalisé essentiellement sous forme de douille de palier lisse constituée d'un matériau de palier lisse.

13. Frein de véhicule (1) à commande électromécanique selon l'une quelconque ou plusieurs des revendications précédentes, **caractérisé en ce que** l'élément de compensation (26) est prévu sous forme de composant à plusieurs matériaux réalisé sous forme stratifiée, comprenant au moins un matériau de base et comprenant au moins un matériau de revêtement élastique.

14. Frein de véhicule (1) à commande électromécanique selon l'une quelconque ou plusieurs des revendications précédentes, **caractérisé en ce qu'**un module de broche prémontable comprend plusieurs parties, à savoir un disque de butée (19) avec une butée tangentielle (20) en tant que moyen de butée pour une surface de butée associée, placée tangentiellement, de l'écrou fileté (12) .

15. Frein de véhicule (1) à commande électromécanique selon l'une quelconque ou plusieurs des revendications précédentes, **caractérisé en ce qu'**un boîtier (2) présente des moyens pour étanchéifier (16) une chambre de pression (17).

16. Frein de véhicule (1) à commande électromécanique selon l'une quelconque ou plusieurs des revendications précédentes, **caractérisé en ce que** l'unité structurelle de piston prémontable comprend un insert conique (31) qui est introduit entre le piston (4) et l'écrou fileté (12) .

17. Frein de véhicule (1) à commande électromécanique selon l'une quelconque ou plusieurs des revendications précédentes, **caractérisé en ce que** des corps de roulement de forme sphérique (13) et des moyens de ressort se trouvent entre une broche filetée (11) entraînée en rotation et un écrou fileté (12) disposé de manière solidaire en rotation dans un boîtier (2).

18. Frein de véhicule (1) à commande électromécanique selon l'une quelconque ou plusieurs des revendications précédentes, **caractérisé en ce que** l'élément de compensation (26) entre les composants adjacents constitués par le piston (4) et l'écrou fileté (12) est disposé en tant que corps intermédiaire séparé, un diamètre intérieur de l'élément de compensation (26) ayant de plus grandes tolérances qu'un diamètre extérieur de l'écrou fileté (12).
